# EUROPÄISCHE PATENTSCHRIFT

(11) **EP 2 636 913 B1**
(45) Veröffentlichungstag und Bekanntmachung des Hinweises auf die Patenterteilung: **23.04.2014**
(21) Anmeldenummer: 12158512.9
(22) Anmeldetag: 08.03.2012
(51) Int. Cl.: F16C 23/08, F16D 23/14, F16C 33/76

(54) **Ausrückeinrichtung für eine Kraftfahrzeugreibungskupplung mit einem Pendelkugellager**
Extraction device for a motor vehicle friction coupling with an oscillating ball bearing
Dispositif d'extraction pour un embrayage à friction de véhicule automobile doté d'un roulement à billes à rotule

(43) Veröffentlichungstag der Anmeldung: 11.09.2013
(73) Patentinhaber: ZF Friedrichshafen AG, 88038 Friedrichshafen (DE)
(72) Erfinder: Obergfell, Ralf, 96052 Bamberg (DE); Rauch, Peter, 97688 Bad Kissingen (DE)

(56) Entgegenhaltungen:
- EP-A1- 0 511 051
- EP-A1- 2 256 357
- FR-A1- 2 255 504
- FR-A1- 2 286 313
- FR-A1- 2 334 880
- GB-A- 2 140 524

## Beschreibung

Die Erfindung betrifft eine Ausrückeinrichtung für eine Kraftfahrzeugreibungskupplung gemäß dem Oberbegriff von Patentanspruch 1.

Eine gattungsgemäße Ausrückeinrichtung zur Betätigung einer Reibungskupplung eines Kraftfahrzeuges mit einem als Pendelkugellager ausgeführten Ausrücklager zum Ausgleich von Taumelbewegungen der Kupplung und eines Schrägstandes der Kupplungsachse zu der Ausrückerachse ist bereits mit der EP 2 256 357 A1 bekannt geworden. Bei diesem dort zweireihig ausgeführten Ausrücklager liegt ein Mittelpunkt eines Laufbahnradius des radial äußeren Lagerringes auf der Mittelachse des Ausrücklagers. Das Ausrücklager weist eine den Lagerinnenraum gegenüber der Umgebung abdichtende Dichtungsanordnung mit einem am äußeren Lagerring angeordneten Dichtelement auf, welches einen zwischen den Lagerringen vorhandenen Radialspalt überbrückt und welches mit einer an dem inneren Lagerring ausgebildeten Dichtfläche in Dichtkontakt steht. Die miteinander in Dichtkontakt stehenden Flächen weisen beide einen Radius auf, der von der Mittelachse des Ausrücklagers ausgeht und mit dem genannten Laufbahnradius einen gemeinsamen Mittelpunkt aufweist. Bei einer Taumelbewegung unter einer gegenseitigen Verschwenkung der Lagerringe bleibt der dazwischen befindliche Dichtspalt unabhängig vom Betrag der Verschwenkung konstant.

Von dem genannten Stand der Technik ausgehend, stellt sich die Erfindung die Aufgabe, eine Ausrückeinrichtung der eingangs genannten Art mit einem Pendelkugellager mit einer vereinfachten Dichtungsanordnung bereitzustellen.

Die vorstehend genannte Aufgabe wird durch eine gattungsgemäße Ausrückeinrichtung gelöst, welche zusätzlich die im Kennzeichen des Hauptanspruchs genannten Merkmale aufweist.

Es wird demnach bei einer Ausrückeinrichtung der eingangs genannten Art zur Bildung der Dichtungsanordnung vorgeschlagen, sowohl den inneren als auch den äußeren Lagerring jeweils mit einer zumindest näherungsweise sphärischen Dichtfläche zu versehen, welche sich gegenüberliegen und welche jeweils einen zumindest angenommenen Radius aufweisen, der von der Mittelachse des Ausrücklagers ausgeht und mit dem Laufbahnradius einen gemeinsamen Mittelpunkt bildet.

Durch die erfindungsgemäße Ausbildung der Dichtungsanordnung werden also die miteinander in Dichtkontakt stehenden Flächen durch die Lagerringe selbst gebildet. Der konstruktive Aufbau der Dichtung ist somit wesentlich vereinfacht, was mit reduzierten Herstellungs- und Montagekosten einhergeht. Die Dichtungsanordnung kann als Berührungsdichtung mit aufeinander gleitenden Lagerringen oder als Spaltdichtung ausgeführt sein.

Die Laufbahnen des Pendelkugellagers können beispielsweise wie in der FR 2255 504 oder der EP 1 375 946 A1 beschrieben, ausgeführt werden. Das heißt insbesondere, dass die Pendel-Laufbahn des Außenrings ein oder beidseitig von einem weiteren Laufbahnabschnitt begrenzt sein kann, dessen Laufbahnradius als Schmiegeradius nur unwesentlich größer als der Radius der Kugeln ausgeführt ist. Außen- und Innenring des Ausrücklagers sind wahlweise als Massivteile oder gewichtsoptimiert als Blechumformteile herstellbar, wobei die Lagerringlaufbahnen zusätzlich durch bekannte Hartstoffbeschichtungen gegenüber einem Verschleiß geschützt werden können. Der Zusammenhalt des Ausrücklagers kann durch an den Lagerringen ausgeführte Schnappborde oder alternativ mittels an Umgebungsbauteilen vorgesehenen Haltestrukturen erfolgen, welche hierzu einen oder beide Lagerringe axial übergreifen und sich mit diesen radial überlappen. Gemäß einer anderen möglichen Ausgestaltungsvariante kann das Pendelkugellager wie grundsätzlich in der EP 2 256 357 A1 beschrieben auch als zweireihiges Lager ausgeführt werden.

In den abhängigen Ansprüchen sind vorteilhafte Ausführungsformen und Weiterbildungen der Erfindung beschrieben.

Gemäß einer bevorzugten Ausführungsform kann das Ausrücklager als mit dessen radial äußeren Lagerring gegenüber dem Ausrückelement drehfest, jedoch radial selbstzentrierend angeordnet sein, indem der äußere Lagerring mit einem radial verlaufenden Boden zumindest mittelbar an einem Radialflansch des Ausrückelements an einer als Gleitebene dienenden Anlagefläche anliegt und dort radial verlagerbar gehalten wird. Auf diese Weise kann durch eine Selbstzentrierung ein Versatz von Kupplungs- und Ausrückachse ausgeglichen werden.

Es ist weiter zur Realisierung der Dichtungsanordnung günstig, eine der Dichtflächen am radial inneren Bereich des Radialbodens des äußeren Lagerrings und die andere Dichtfläche an einem Axialschenkel des inneren Lagerrings auszubilden.

Zur Ermöglichung einer ungehinderten Taumelbewegung des gemeinsam mit der Kupplung umlaufenden Lagerrings des Ausrücklagers ist an dem Ausrückelement in einem Basisbereich des Radialflansches eine Taumelaussparung vorgesehen, wobei deren axiale Begrenzung gegenüber der Gleitebene bzw. gegenüber der Anlagefläche des am Ausrückelement drehfest angeordneten Lagerrings von dem Ausrücklager weg versetzt ausgebildet ist.

Weiterhin kann bei der Ausrückeinrichtung an dem das Ausrücklager tragendem Ausrückelement ein Axialfortsatz ausgebildet sein, der sich innerhalb des Lagers in Richtung der Reibungskupplung erstreckt und der mit dem Axialschenkel des inneren Lagerings einen Ringraum ausbildet, welcher bevorzugt als ein Schmiermittelreservoir dienen kann.

Zur Begrenzung der wirkenden Flächenbelastungen kann das Pendelkugellager vor-teilhaft als zweireihiges Schrägkugellager ausgeführt werden.

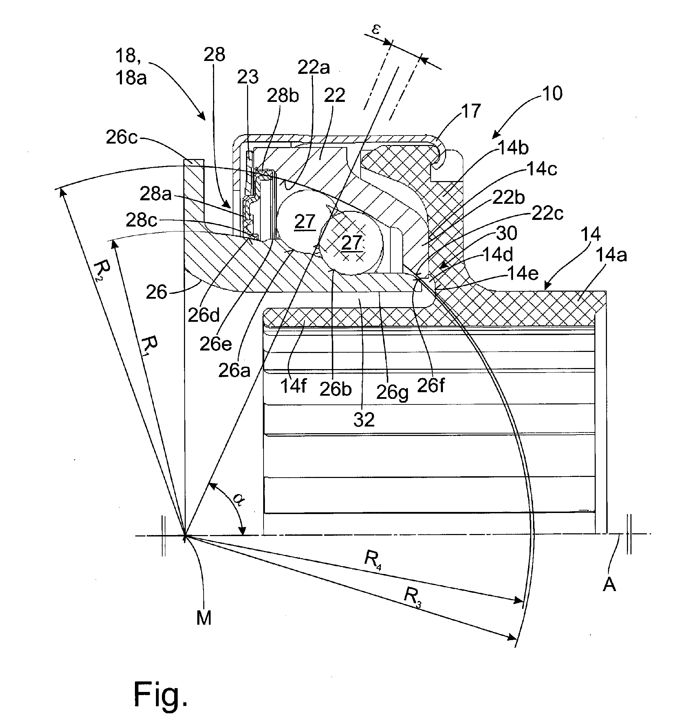

Die Erfindung wird nachfolgend anhand der beigefügten Figur beispielhaft erläutert, welche in einer Halbebene einen Axialschnitt einer Ausrückeinrichtung 10 zur Betätigung einer hier zeichnerisch nicht dargestellten Reibungskupplung eines Kraftfahrzeuges zeigt.

Die Ausrückeinrichtung 10 umfassend ein als Schiebehülse mit einem rohrförmigen Führungsabschnitt 14a ausgeführtes Ausrückelement 14 mit einem Ausrücklager 18, welches hier als Pendelkugellager 18a, insbesondere als zweireihiges Schrägkugellager vorliegt. Das Ausrücklager 18 weist einen zu dem Ausrückelement 14 drehfesten Lagerring 22 mit einer ersten Laufbahn 22a, einen umlaufenden Lagerring 26 mit einer zweiten Laufbahn 26a, b und zwischen den Laufbahnen 22a; 26a, b geführte Wälzkörper 27 auf. Zur Übertragung einer Ausrückkraft ist an dem umlaufenden, hier inneren Lagerring ein Ringflansch 26c herausgebildet, an welchem ein Ausrückorgan, zum Beispiel Federzungen einer Membranfeder angreifen können. Durch diese Ausgestaltung kann der Innenring 26 einen Schrägstand der Kupplungsachse zur Mittelachse A der Ausrückeinrichtung 10 und Taumelbewegungen der Kupplung kompensieren, indem der Innenring 26 mit den Wälzkörpern 27 um einen Winkel ε um die Mittellage, genauer um den Betriebsdruckwinkel α pendeln kann.

Es ist erkennbar, dass das Ausrücklager 18 mittels einer den äußeren Lagerring 22 umgreifenden Halteklammer 17 an einem Radialflansch 14b des Ausrückelements 14 drehfest angeordnet ist und an dort über einen radialen Bodenbereich 22b an einer Anlagefläche 14c des Ausrückelements 14 anliegt. Diese Anordnung ermöglicht eine gegenseitige radiale Ausrichtung von Ausrücklager 18 und Ausrückelement 14, indem sich der Bodenbereich 22b radial an dessen eine Gleitebene bildende Anlagefläche 14c innerhalb eines gewissen Bereiches zum Ausgleich eines Achsversatzes von Kupplungs- und Ausrückachse A verlagern bzw. verschieben kann.

Die beiden Lagerringe 22, 26 des Ausrücklagers 18 sind radial zueinander angeordnet, wobei ein Mittelpunkt eines Laufbahnradius R1 des radial äußeren Lagerrings 22 auf der Mittelachse A des Ausrücklagers 18 liegt.

Das Ausrücklager 18 umfasst zwei, den Lagerinnenraum gegenüber der Umgebung abdichtende Dichtungsanordnungen 28; 30. Eine erste Dichtungsanordnung 28 ist dabei an der zur Reibungskupplung gerichteten Stirnseite vorgesehen. Diese kupplungsseitige Dichtungsanordnung 28 umfasst als Dichtelement 28a eine Metall-Elastomerringdichtung, die mit einem Ringkragen 28b fest mit dem Lageraußenring 22 verbunden und dort mittels der Federscheibe 23 axialgesichert ist und deren radial innen befindliche elastische Dichtlippe 28c im Kontakt mit einer Dichtfläche 26d des Innenringes 26 steht, deren Radius R2 ebenfalls von der Mittelachse A des Ausrücklagers 18 ausgeht und mit dem Laufbahnradius R1 den gemeinsamen Mittelpunkt M aufweist. Die Dichtfläche 26d wird zur Laufbahn 26a, b hin von einem nach radial außen gerichteten Bord 26e begrenzt, welches im Zusammenwirken mit dem Dichtelement 28a die Lagerringe 22, 26 unverlierbar zusammenhält.

Eine zweite Dichtungsanordnung 30 befindet sich an der dem Radialflansch zugewandten Stirnseite des Ausrücklagers 18. Zur Bildung dieser Dichtungsanordnung 30 weisen beide Lagerringe 22, 26 jeweils eine sphärische Dichtfläche 22c; 26f auf, welche sich gegenüberliegen und welche jeweils einen Radius (R3; R4) aufweisen, der von der Mittelachse A des Ausrücklagers 18 ausgeht und mit dem Laufbahnradius R1 einen gemeinsamen Mittelpunkt M bildet. Genauer ist eine der sphärischen Dichtflächen 22c am radial inneren Bereich des Radialbodens 22b des äußeren Lagerrings 22 und die andere sphärische Dichtfläche 26f an einem Axialschenkel 26g des inneren Lagerrings 26 ausgebildet.

Allgemein sollten die beiden Dichtflächen 22c; 26f zumindest näherungsweise sphärisch ausgeführt sein, so dass bei einer Taumelbewegung des radial inneren Lagerringes 26 der gegenseitige Abstand der Lagerringe 22, 26 im Dichtungsbereich etwa konstant erhalten bleibt und eine Dichtwirkung unabhängig von einer momentanen Taumelstellung gewährleistet ist. Eine zumindest näherungsweise sphärische Ausgestaltung schließt auch eine konische Gestaltung einer oder beiden Fläche ein, die dann als Tangenten von gedachten Kreisen vorliegen kann bzw. können. Die entsprechenden Radien sind dann als Abstände zu sehen, die an diesen Bereichen bei einer Betrachtung vereinfacht jeweils als Radius angenommen werden können. Die Dichtflächen 22c, 26f können einen Spalt einschließen oder sich auch gegenseitig berühren. Es ist auch möglich, dass zumindest eine der Dichtflächen ein Auflageelement aus einem gegenüber den üblicherweise aus einem Stahlwerkstoff hergestellten Lagerringen 22, 26 weicheren Material, beispielweise aus einem Kunststoff oder einem Filz aufweist.

Zur Ermöglichung einer Taumelbewegung ist an dem Ausrückelement 14, insbesondere in einem Basisbereich des Radialflansches 14b eine Taumelaussparung 14d ausgebildet, deren axiale Begrenzung 14e gegenüber der Anlagefläche 14c bzw. der Gleitebene des Ausrücklagers 18 an dem Ausrückelement 14 um einen bestimmten Betrag axial versetzt ausgebildet ist.

Das Ausrückelement 14 weist ferner einen sich innerhalb des Ausrücklagers 18 er-streckenden Axialfortsatz 14f auf, der mit dem Axialschenkel 26g des inneren Lagerings einen Ringraum 32 ausbildet, der vorteilhaft als Schmiermittelreservoir zur Schmierung des Ausrücklagers 18 dienen kann.

### Bezugszeichen

- 10: Ausrückeinrichtung
- 14: Ausrückelement, Schiebehülse
- 14a: Führungsabschnitt
- 14b: Radialflansch
- 14c: Anlagefläche
- 14d: Taumelaussparung
- 14e: axiale Begrenzung
- 14f: Axialfortsatz
- 17: Halteklammer
- 18: Ausrücklager
- 18a: Pendelkugellager
- 20: Membranfeder
- 22: Lageraußenring
- 22a: Laufbahn
- 22b: Radialboden
- 22c: Dichtfläche
- 23: Federscheibe
- 26: Lagerinnenring
- 26a, b: Laufbahn
- 26c: Ringflansch
- 26d: Dichtfläche
- 26e: Bord
- 26f: Dichtfläche
- 26g: Axialschenkel
- 27: Wälzkörper
- 28, 30: Dichtungsanordnung
- 28a: Dichtelement
- 28b: Ringkragen
- 28c: Dichtlippe
- 32: Ringraum
- A: Mittelachse
- M: Mittelpunkt
- R1, R2, R3, R4: Radius

## Patentansprüche

1. Ausrückeinrichtung (10) zur Betätigung einer Reibungskupplung eines Kraftfahrzeuges, umfassend
- ein Ausrückelement (14) mit einem als Pendelkugellager (18a) ausgeführten Ausrücklager (18),welches
- einen zu dem Ausrückelement (14) drehfesten Lagerring (22) mit einer ersten Laufbahn (22a), einen umlaufenden Lagerring (26) mit einer zweiten Lauf-bahn (26a, b) und zwischen den Laufbahnen (22a; 26a,b) geführte Wälzkör-per (27) aufweist und wobei
- die Lagerringe (22, 26) radial zueinander angeordnet sind und ein Mittelpunkt eines Laufbahnradius (R1) des radial äußeren Lagerrings (22) auf der Mittel-achse (A) des Ausrücklagers (18) liegt, wobei
- das Ausrücklager (18) eine den Lagerinnenraum gegenüber der Umgebung abdichtende Dichtungsanordnung (30) umfasst,
**dadurch gekennzeichnet, dass** zur Bildung der Dichtungsanordnung (30) bei-de Lagerringe (22, 26) jeweils eine zumindest näherungsweise sphärische Dichtfläche (22c; 26f) aufweisen, welche sich gegenüberliegen und welche jeweils einen zumindest angenommenen Radius (R3; R4) aufweisen, der von der Mittelachse (A) des Ausrücklagers (18) ausgeht und mit dem Laufbahnradius (R1) einen gemeinsamen Mittelpunkt (M) bildet.

2. Ausrückeinrichtung nach Patentanspruch 1, **dadurch gekennzeichnet, dass** das Ausrücklager (18) mit dessen radial äußeren Lagerring (22) gegenüber dem Ausrückelement (14) drehfest, jedoch radial selbstzentrierend angeordnet ist, indem der äußere Lagerring (22) mit einem Radialboden (22b) zumindest mittelbar an einem Radialflansch (14b) des Ausrückelements (14) an einer Anlagefläche (14c) radial verlagerbar gehalten wird.

3. Ausrückeinrichtung nach Anspruch 1 oder 2, **dadurch gekennzeichnet, dass** eine der Dichtflächen (22c) am radial inneren Bereich des Radialbodens (22b) des äußeren Lagerrings (22) und dass die andere Dichtfläche (26f) an einem Axialschenkel (26g) des inneren Lagerrings (26) ausgebildet ist.

4. Ausrückeinrichtung nach einem der Ansprüche 1-3, **dadurch gekennzeichnet, dass** das Ausrückelement (14) in einem Basisbereich des Radialflansches (14b) einen Taumelaussparung (14d) aufweist, deren axiale Begrenzung (14e) gegen-über der Anlagefläche (14c) des Ausrücklagers (18) an dem Ausrückelement (14) versetzt ausgebildet ist.

5. Ausrückeinrichtung nach einem der Ansprüche 1-4, **dadurch gekennzeichnet, dass** das Ausrückelement (14) einen sich innerhalb des Ausrücklagers (18) erstreckenden Axialfortsatz (14f) aufweist, der mit dem Axialschenkel (26g) des inneren Lagerings (26) einen Ringraum (32) ausbildet.

6. Ausrückeinrichtung nach einem der Ansprüche 1-5, **dadurch gekennzeichnet, dass** das Pendelkugellager (18a) als zweireihiges Schrägkugellager ausgeführt ist.

## Claims

1. Release device (10) for actuating a friction clutch of a motor vehicle, comprising
- a release element (14) with a release bearing (18) which is configured as a self-aligning ball bearing (18a) and
- has a bearing ring (22) which is fixed rotationally with respect to the release element (14) with a first raceway (22a), a circumferential bearing ring (26) with a second raceway (26a, b) and rolling bodies (27) which are guided between the raceways (22a; 26a, b), and
- the bearing rings (22, 26) being arranged radially with respect to one another, and a centre point of a raceway radius (R1) of the radially outer bearing ring (22) lying on the centre axis (A) of the release bearing (18),
- the release bearing (18) comprising a seal arrangement (30) which seals the bearing interior space with respect to the surroundings,
**characterized in that**, in order to form the seal arrangement (30), both bearing rings (22, 26) in each case have an at least approximately spherical sealing face (22c; 26f), which sealing faces (22c; 26f) lie opposite one another and in each case have an at least assumed radius (R3; R4) which starts from the centre axis (A) of the release bearing (18) and forms a common centre point (M) with the raceway radius (R1).

2. Release device according to Patent Claim 1, **characterized in that** the release bearing (18) is arranged with its radially outer bearing ring (22) in a manner which is rotationally fixed with respect to the release element (14) but is self-centring radially, by the outer bearing ring (22) being held radially displaceably with a radial bottom (22b) on a bearing face (14c) at least indirectly on a radial flange (14b) of the release element (14).

3. Release device according to Claim 1 or 2, **characterized in that** one of the sealing faces (22c) is formed on the radially inner region of the radial bottom (22b) of the outer bearing ring (22), and **in that** the other sealing face (26f) is formed on an axial limb (26g) of the inner bearing ring (26).

4. Release device according to one of Claims 1 to 3, **characterized in that** the release element (14) has a tumbled cut-out (14d) in a base region of the radial flange (14b), the axial boundary (14e) of which tumbled cut-out (14d) is formed offset with respect to the bearing face (14c) of the release bearing (18) on the release element (14).

5. Release device according to one of Claims 1 to 4, **characterized in that** the release element (14) has an axial projection (14f) which extends within the release bearing (18) and forms an annular space (32) with the axial limb (26g) of the inner bearing ring (26).

6. Release device according to one of Claims 1 to 5, **characterized in that** the self-aligning ball bearing (18a) is configured as a double-row angular-contact ball bearing.

## Revendications

1. Dispositif de débrayage (10) pour l'actionnement d'un embrayage à friction d'un véhicule automobile, comprenant :
- un élément de débrayage (14) avec un palier de débrayage (18) réalisé sous forme de roulement à billes articulé (18a), qui
- présente une bague de palier (22) solidaire en rotation de l'élément de débrayage (14) avec une première piste de roulement (22a), une bague de palier périphérique (26) avec une deuxième piste de roulement (26a,b) et des corps de roulement (27) guidés entre les pistes de roulement (22a ; 26a,b) et
- les bagues de palier (22, 26) étant disposées radialement l'une par rapport à l'autre et un centre d'un rayon de piste de roulement (RI) de la bague de palier radialement externe (22) étant situé sur l'axe médian (A) du palier de débrayage (18),
- le palier de débrayage (18) comprenant un agencement d'étanchéité (30) réalisant l'étanchéité de l'espace interne de palier par rapport à l'environnement,
**caractérisé en ce que** pour former l'agencement d'étanchéité (30), les deux bagues de palier (22, 26) présentent chacune une surface d'étanchéité au moins approximativement sphérique (22c ; 26f), lesquelles sont en regard l'une de l'autre et présentent à chaque fois un rayon au moins présumé (R3 ; R4) qui part de l'axe médian (A) du palier de débrayage (18) et qui forme avec le rayon de piste de roulement (R1) un centre commun (M).

2. Dispositif de débrayage selon la revendication 1, **caractérisé en ce que** le palier de débrayage (18) est disposé avec sa bague de palier radialement externe (22) de manière solidaire en rotation par rapport à l'élément de débrayage (14), mais de manière à s'auto-centrer radialement, par le fait que la bague de palier externe (22) est retenue par un fond radial (22b) de manière déplaçable radialement au niveau d'une surface d'appui (14c) au moins indirectement contre une bride radiale (14b) de l'élément de débrayage (14).

3. Dispositif de débrayage selon la revendication 1 ou 2, **caractérisé en ce que** l'une des surfaces d'étanchéité (22c) est réalisée au niveau de la région radialement interne du fond radial (22b) de la bague de palier externe (22) et **en ce que** l'autre surface d'étanchéité (26f) est réalisée au niveau d'une branche axiale (26g) de la bague de palier interne (26).

4. Dispositif de débrayage selon l'une quelconque des revendications 1 à 3, **caractérisé en ce que** l'élément de débrayage (14) présente, dans une région de base de la bride radiale (14b), un évidement de nutation (14d), dont la limitation axiale (14e) est réalisée de manière décalée par rapport à la surface d'appui (14c) du palier de débrayage (18) au niveau de l'élément de débrayage (14).

5. Dispositif de débrayage selon l'une quelconque des revendications 1 à 4, **caractérisé en ce que** l'élément de débrayage (14) présente une saillie axiale (14f) s'étendant à l'intérieur du palier de débrayage (18), laquelle constitue un espace annulaire (32) avec la branche axiale (26g) de la bague de palier interne (26).

6. Dispositif de débrayage selon l'une quelconque des revendications 1 à 5, **caractérisé en ce que** le roulement à billes articulé (18a) est réalisé sous forme de roulement à billes à contact oblique à deux rangées.
